# EUROPEAN PATENT SPECIFICATION

(11) **EP 3 580 446 B1**
(45) Date of publication and mention of the grant of the patent: **18.08.2021**
(21) Application number: 18703298.2
(22) Date of filing: 01.02.2018
(51) Int. Cl.: F02M 63/00, F02M 47/02, F02M 61/20, F16K 31/06

(54) **CONTROL VALVE ARRANGEMENT FOR A DUAL FUEL INJECTOR**
STEUERVENTILANORDNUNG FÜR EIN DUALES KRAFTSTOFFEINSPRITZVENTIL
AGENCEMENT DE SOUPAPE DE COMMANDE D'UN INJECTEUR DE CARBURANT DOUBLE

(30) Priority: 08.02.2017 GB 201702059
(43) Date of publication of application: 18.12.2019
(73) Proprietor: Delphi Technologies IP Limited, Saint Michael (BB)
(72) Inventor: YEARSLEY, Jason, Bristol BS34 5FN (GB); HOMES, Graham D., Putley Common Gloucestershire HR8 2RF (GB)
(74) Representative: Allain, Michel Jean Camille
(86) International application number: PCT/EP2018/052586
(87) International publication number: WO 2018/146004

(56) References cited:
- EP-A2- 0 781 913
- WO-A1-2006/072757
- DE-A1-102005 056 133
- DE-A1-102008 002 146

## Description

### TECHNICAL FIELD

The present invention relates to dual-fuel equipment and more particularly to dual-fuel injector and the structure of said injector enabling to inject diesel fuel and compressed natural gas within the same injector.

### BACKGROUND OF THE INVENTION

Diesel fuel injectors are provided with a control valve that alternatively open or close a spill orifice enabling to vary the pressure in a control chamber thus forcing a valve member to move and thus command, or not, injection events. Said control valve comprises a spool that translates in a bore between a position where the end face of the spool abuts a complementary stop face and a position where said end face is lifted away from said complementary face. Because of the dimensional tolerances, when commended in abutment, the contact area is biased and the sealing is not perfect to the contrary of the expectation. Furthermore, the contact area being smaller than what it should theoretically be, the contacting pressures are much higher which generates damages. WO2006072757, EP0781913, DE102005056133 disclose prior art relevant to the present invention.

### SUMMARY OF THE INVENTION

Accordingly, it is an object of the present invention to resolve the above mentioned problems in providing a control valve adapted to be arranged in a fuel injector of an internal combustion engine between an injector upper member and a nozzle assembly, said control valve having a body defining an upper face adapted to be pressed against a complementary face of said upper member, a hydraulic bore extending about a main axis and in which is axially guided an armature-and-spool assembly opens in said upper end face. The spool of said assembly has an upper end region defining an upper end face adapted to be pressed in sealing contact against said complementary face and, said upper end region is further provided with an annular groove arranged in close vicinity to said upper end face.

In another aspect of the invention, a disc-flange comprising the peripheral edge area of the upper end face may be defined between said upper end face and said groove, said disc-flange being adapted to allow a slight deflection when said upper end face is pressed in sealing contact against said complementary face.

Said spool may be further provided with an inner channel axially extending and centrally opening in said upper end face, fuel at low pressure flowing in use in said inner channel.

The opening of the hydraulic bore in the valve upper face faces a hollow dug in said complementary face, said hollow having a smaller section than the bore so that, when pressed against said complementary face, the peripheral edge area of the spool upper end face comes in contact against an annular area surrounding said hollow.

Also, the opening of the inner channel in said upper end face may defines a counterbore arranged in said end face.

Also, the opening of the hydraulic bore in the valve upper face may defines a gallery arranged in the upper face so that, the upper end region of the spool protrudes in said gallery.

Also, said annular groove may open in said gallery.

Also, in use, pressurised fuel fills said gallery and said groove.

The invention further extends to a fuel injector provided with a control valve as described above.

More specifically, said injector may be a dual-fuel injector adapted to be arranged in a dual-fuel injection equipment of an internal combustion engine.

The invention further extends to a fuel injection equipment comprising at least one fuel injector as mentioned above.

The invention further extends to a dual-fuel injection equipment comprising at least one dual-fuel injector as previously mentioned.

### BRIEF DESCRIPTION OF THE DRAWINGS

The present invention is now described by way of example with reference to the accompanying drawings in which:
Figure 1 is a 3D view of an internal combustion engine operating on two different fuels conveyed by injection equipment provided with dual-fuel injectors as per the invention.
Figure 2 is a 3D representation of the dual-fuel injector represented on figure 1.
Figure 3 is an axial section of the dual-fuel injector represented on figure 1 and figure 2.
Figure 4 is a portion of figure 3 where is particularly shown a control valve area.
Figures 5, 6 and 7 are magnified views of said control valve.
Figure 8 is an axial section of a 3-way valve as per the invention.

### DESCRIPTION OF THE PREFERRED EMBODIMENTS

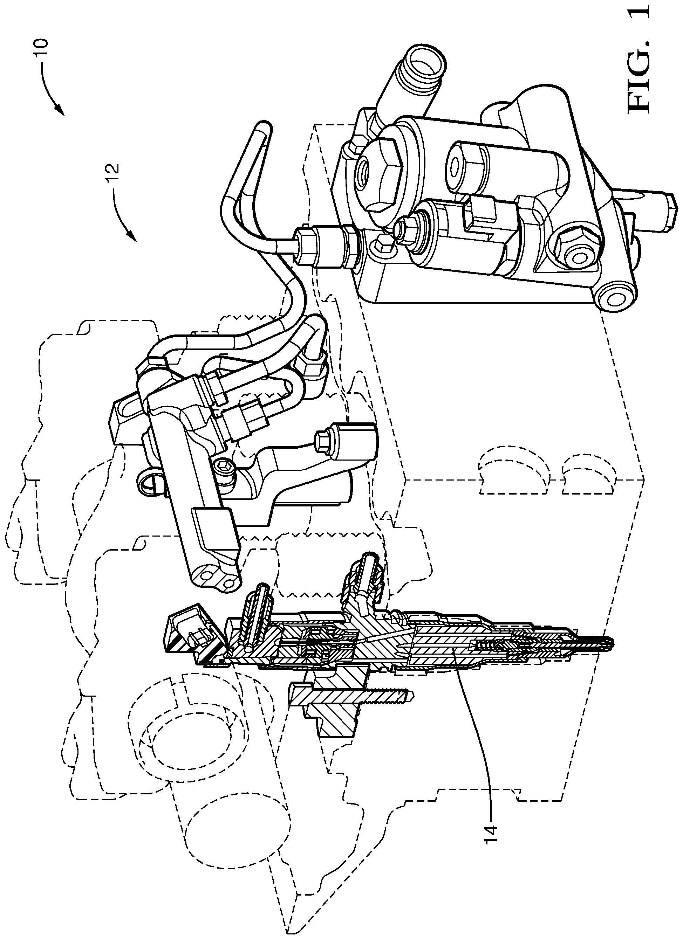

The invention, which subject matter is a control valve 34 was initially thought in the context of a dual-fuel injector 14 of dual-fuel injection equipment 12 of an internal combustion engine 10 sketched in figure 1 in phantom lines. Said equipment is adapted to inject diesel fuel, hereafter diesel or first fuel F1, and compressed natural gas, hereafter CNG or second fuel F2, that are both pressurised to about 500 bars.

Although being described in said specific dual-fuel context, the invention is adapted and transferable to similar control valve of other fuel injectors such as known diesel fuel injector but, can also be used within a fuel pump or any other device comprising a similar control valve.

The dual-fuel injection equipment 12 comprises a pump, several pipes and a dual-fuel common-rail, or manifold, the diesel first fuel F1 and the CNG second fuel F2 being segregated from each other, both fuels being delivered to the same dual-fuel injectors 14 provided with separate first inlet 16 for the first fuel F1 and, second inlet 18 for the second fuel F2, said fuels being alternatively sprayed, via separate sets of spray holes, in the piston. On figure 1 only one injector 14 is represented in axial section although it is known that several injectors equip a multi-piston engine such as a truck engine.

The injector 14 comprises several members stacked on the top of each other and, said lengthy arrangement enables to arrange the injector 14 in a deep well provided in the engine block still having the first 16 and second 18 inlets outside the well, this facilitating the connections of pipes of the fuel equipment.

An injection event is a sequence of individual events happening around the top dead centre (TDC) position of a piston, said sequence comprising one or several pilot-injection, or pre-injection, one main injection followed by one or several post-injection events. During the pre- and the post-injections a small quantity of first fuel F1 is sprayed in the piston of the engine and, during the main injection a large quantity of second fuel F2 is sprayed in said piston.

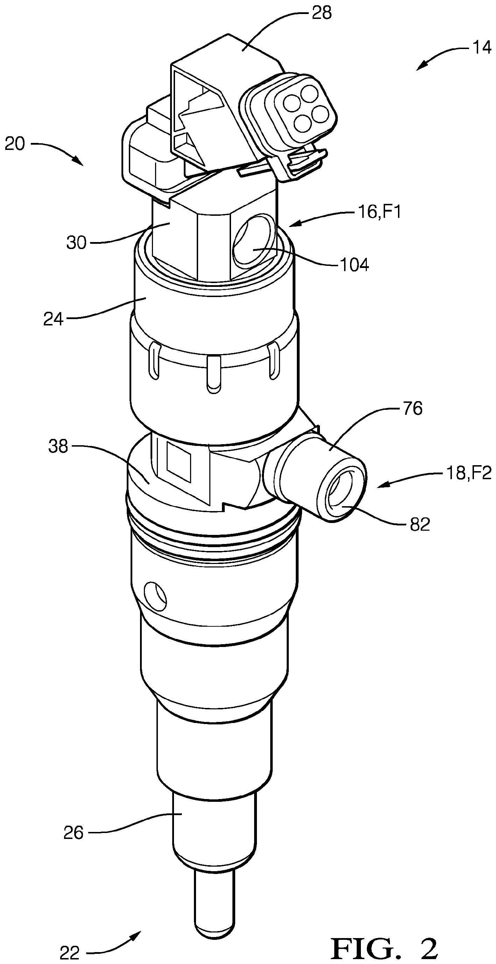

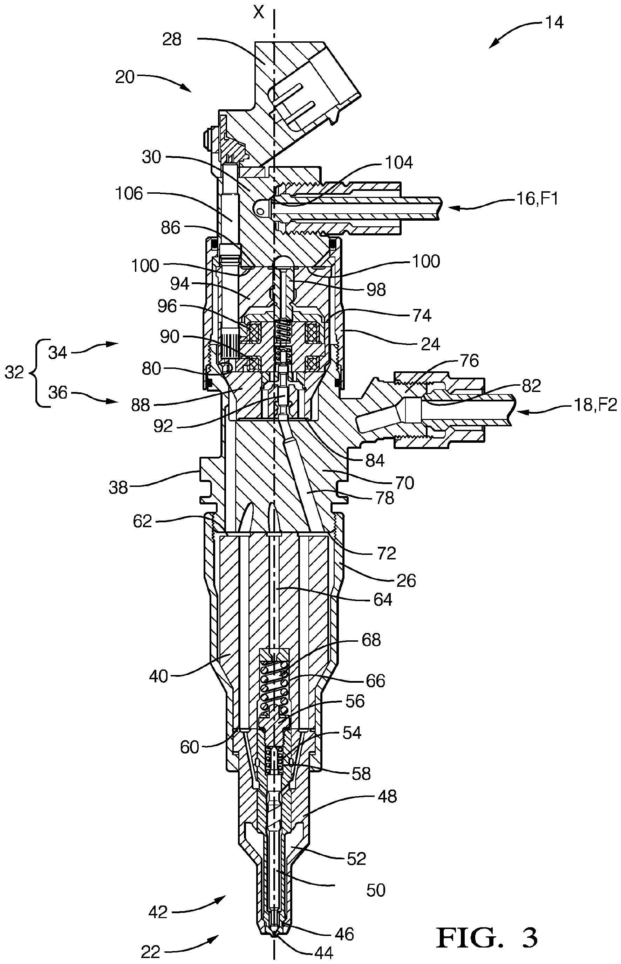

More in details in reference to the figures 2 and 3, the dual-fuel injector 14 has an elongated shape extending from a head 20 to a nozzle tip 22 and, in-between, the injector 14 comprises several members stacked on the top of each other and firmly maintained together by a first capnut 24 and a second capnut 26.

From top to bottom, following the arbitrary orientation of figure 3, the injector 14 comprises an electrical connector 28 arranged on the top of a first inlet body 30, wherein is defined the first inlet 16, then a double control valve assembly 32 comprising a second control valve 34 and below it, a first control valve 36 arranged against a second inlet body 38, wherein is defined the second inlet 18, then follows a barrel member 40 and a nozzle assembly 42 at the tip of which are arranged the injection holes.

Apart of the connector 28 that is usually moulded in plastic material, the other members of the injector 14 are all metallic.

The first capnut 24 bears on a shoulder face provided on the outer face of the first inlet body 30 and, it is screwed to the second inlet body 38, the double control valve assembly 32 being compressed in-between. The second capnut 26 bears on a shoulder face of the outer face of the nozzle assembly 42 and, it is also firmly screwed on the second inlet body 38 that is provided on its outer face with two male threads, the barrel member 40 being compressed between said body 38 and nozzle 42.

The injector 14 further accommodates a first circuit C1 for conveying the first fuel F1 from the first inlet 16 to the nozzle tip 22 where said first fuel F1 is sprayed via a first set of holes 44 and also, a second circuit C2 for conveying the second fuel F2 from the second inlet 18 to the nozzle tip 22 where said second fuel F2 is sprayed via a second set of holes 46.

Precisely, the nozzle assembly 42 comprises a nozzle body 48 extending from an upper transverse face to the tip where are sprayed the fuels, said body 48 having a peripheral wall surrounding an inner space in which a double valve member is axially guided. Said double valve member comprises of a first valve member 50 concentrically guided in a bore provided inside a second valve member 52. The second valve member 52 is a hollow needle adapted to open or close the second set of holes 46 arranged through the bottom end of the peripheral wall of the body 48 and, the first valve member 50 is a plain needle, or inner needle, adapted to open or close the first set of holes 44 arranged through the bottom of said hollow needle 52.

A plug 56 arranged at the end of the hollow needle 52 distant from the injection holes seals the bore enclosing the inner needle 50 and defining a first control chamber 58 between the top end of the inner needle 50 and said sealing plug 56. A first spring 54, compressed in said first control chamber 58 between the plug 56 and the inner needle 50, biases said needle 50 is in a closed position of the first holes 44.

In the nozzle assembly 42, the first fuel circuit C1 divides forming a first fuel injection path extending in the bore of the hollow needle 52 around the inner needle 50 leading to the first set of holes 44 and, a first control path leading to the first control chamber 58, the inner needle 50 lifting to open the first holes 44 when the pressure of the first fuel F1 in said first control chamber 58 drops below a first threshold.

The barrel member 40, arranged above the nozzle assembly 42, extends from an under face 60 pressed in surface contact against the upper transverse face of the nozzle body to, an upper transverse face 62 and, said barrel member 40 is provided with portions of the first fuel circuit C1, portions of the second fuel circuit C2, and also with a conduit forming a second control path 64 axially X extending from the centre of said upper face 62 to the centre of said under face 60 where said second control path 64 opens in the top face of a cylindrical recess defining a second control chamber 66 arranged right above the second valve member 52, the plug 56 in fact partially protruding in said second control chamber 66.

A second spring 68 compressed inside said second control chamber 66 between said top face and the upper face of the plug 56 biases the second valve member 52 is in a closed position of the second holes 46.

The first fuel F1 flows in said second control path 64 and fills the second control chamber 66 and, when the pressure of the first fuel F1 in said second control chamber drops below a second threshold the hollow needle 52 lifts-up and opens the second set of holes 46.

The second inlet body 38, arranged above the barrel member 40, has a main cylindrical member 70 from which extends an integral radial extension 76 wherein is defined the second inlet 18. The main member 70 axially extends from a transverse under face 72 pressed in surface contact against the upper face 62 of the barrel member to an upper transverse face 74.

The second inlet body 38 accommodates other portions of the first circuit C1 downwardly conveying the first fuel F1 toward the nozzle assembly 42 and also, a section of a first return channel 78 enabling the first fuel F1 enclosed in the first control chamber 58 to exit and return toward a first fuel outlet, not represented.

Also, portions of the second fuel circuit C2 are provided in the second inlet body 38 wherein they extend toward the second inlet 18 that defines, in said radial extension 76, a cylindrical channel ending in an enlarging female conical face 82. The extension is adapted to receive a complementary pipe, in which is conveyed the CNG.

In its upper end, the main member 70 of the second inlet body is provided with a recess 80 opening in the upper face 74, thus limiting said upper face 74 to an annular edge surrounding said recess 80. In said recess is arranged the first control valve 36 and, right above the second control valve 34.

The double control valve assembly 32 comprising the first 36 and the second 34 control valves extends from an under face 84 of the first control valve to an upper face 86 of the second control valve. The first control valve 36 has a first body 88 defining said under face 84 of the assembly, body 88 in which is fixed a stator comprising a first solenoid 90 that cooperates with a first armature-and-spool assembly 92 axially guided in a hydraulic bore and armature chamber provided in said first body 88. The second control valve 34, arranged atop the first control valve 36 and above the stator, has a second body 94 defining said upper face 86 of the assembly, body 94 in which is fixed a second stator comprising a second solenoid 96 that cooperates with a second armature-and-spool assembly 98 axially guided in another hydraulic bore and armature chamber arranged in said second body 94. As it is visible on the figure, the two control valve are arranged so the armature-and-spool assemblies are aligned and adapted to slide in opposite directions.

The first inlet body 30 is a cylindrical member having an under face 100 pressed in surface contact against the upper face 86 of the second control valve and an upper face 102 that is an external face of the injector 14. The first fuel circuit C1 extends in said first inlet body 30 where it joins the first inlet 16 that extends radially in said body 30. The first inlet 16 is defined by another female conical face 104 that enlarges the extremity of the first fuel channel C1, said female conical face 104 joining a larger cylindrical threaded bore adapted to receive a complementary nut which forces the end face of a pipe, in which is conveyed the pressurised diesel F1, in metal-to-metal sealing contact against said female conical face 104 of the first inlet 16.

The electrical connector 28, shaped to receive a complementary connector of a command unit not represented, is fixed atop the first inlet body 30 and it comprises electrical pins from which extends electrical leads 106 arranged in a specific bore provided in the first inlet body and in the two control valves bodies, the end of said leads 106 being connected to the first 90 and the second 96 solenoids.

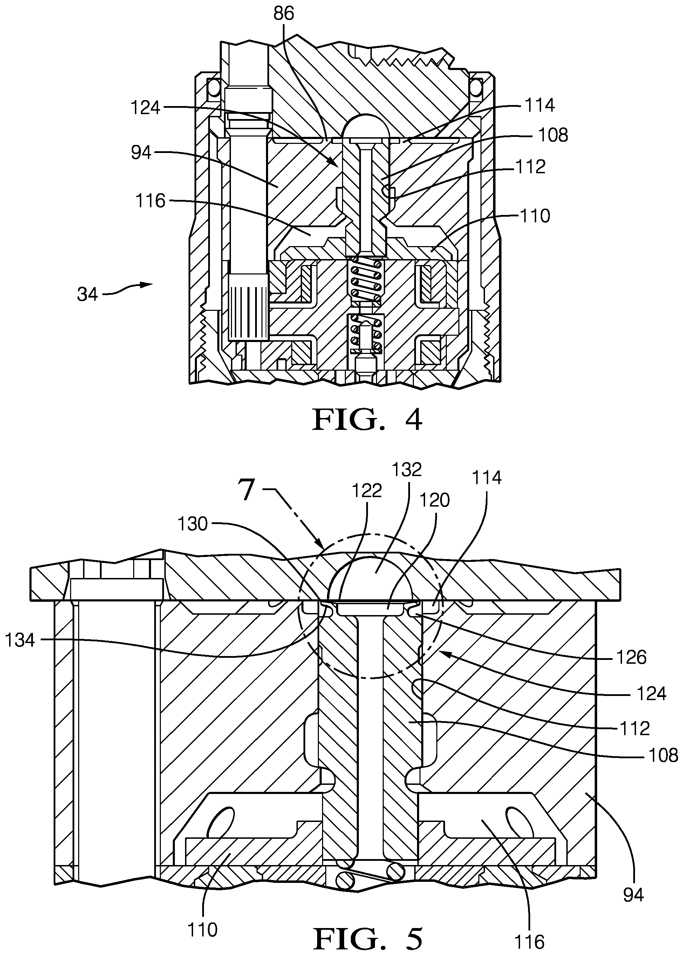

More in detail in reference to figures 4 and 5, the second armature-and-spool assembly 94 comprises a spool 108 which at a lower end is crimped in a disc-shape magnetic armature 110 cooperating with the second solenoid 96. The spool 108 is axially X slidably guided in a hydraulic bore 112 provided in the body 94 of the second control valve, said hydraulic bore 112 extending throughout said body 94, opening in the upper face 86, thereof defining a larger recess forming a gallery 114 and, in the opposite lower end, opening in a very large recess forming a chamber 116 wherein is arranged the disc-shape magnetic armature 110. Moreover, throughout the spool 108 axially extends an inner channel 118 that upwardly opens in a counterbore 120 dug in the transverse upper end face 122 of the spool. Also, the spool 108 is further provided in its upper end region 124 and substantially at the same level as the counterbore 120 with an annular groove 126 arranged in the outer face of the spool and surrounding said spool. The upper end region 124 of the spool therefore defines a disc-flange 128 extending between the upper end face 122, the counterbore 120 and the groove 126, said disc-flange 128 comprising the peripheral edge 130 of the upper end face.

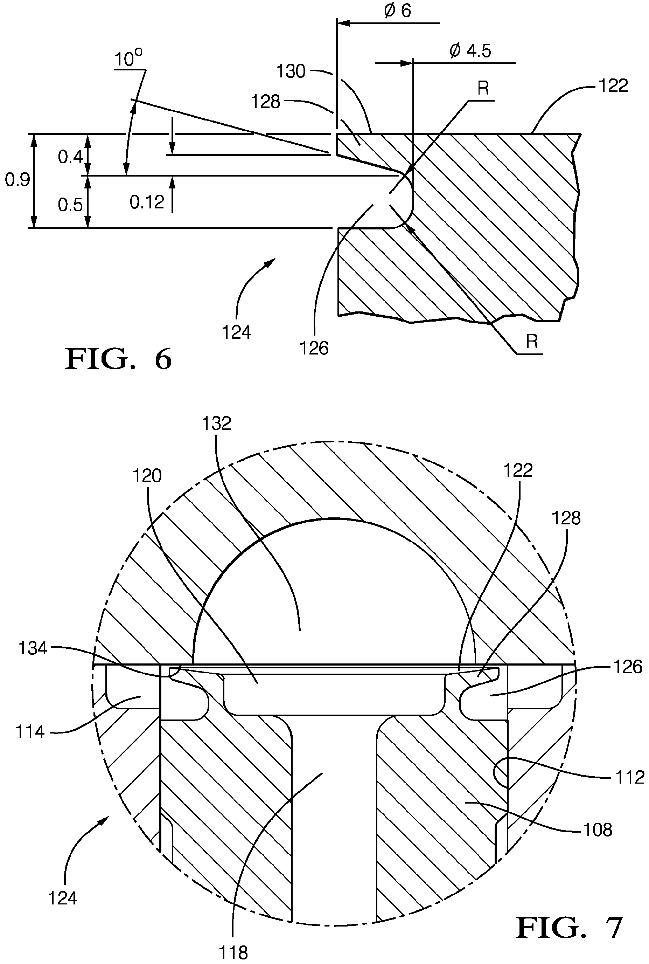

A profile of said groove 126 is shared on figure 6 where the example diameter of the spool 108 is 6mm. The groove profile is a trapezoid with a base, bottom face, from which depart a 10° conical upper face and a planar transverse lower face both joining the outer face of the spool. At the base-bottom of the groove, the spool diameter is about 4.5 mm, meaning a groove depth of about 0.75mm with said bottom face being about 0.5mm height. Also the planar transverse lower face is axially distant by about 1mm from the upper end face 122 of the spool. Using said dimensions, the thickness T of the disc portion 128 reduces from about 0.4mm at the bottom of the groove to about 0.12mm at the outer face of the spool. Other groove profile, such as parallel grooves, can also be used ensuring that the purpose of the groove 126, as is detailed below, is to provide resilient elasticity to said disc portion 128.

Furthermore, the inlet body 30 is provided with a hollow 132, which in the example chosen is semi-spherical although other shapes are possible. Said hollow 132 opens in the under face 100, right above the hydraulic bore 112, where it is smaller than said bore so that, annular portion 134 of said under face 100 surrounding said hollow opening partially covers the hydraulic bore 112. As it is visible on figure 7, when the armature-and-spool assembly 98 is upwardly moved, the upper end region 124 of the spool protrudes in the gallery 114 of the valve upper face and, the peripheral edge 130 of the spool upper end face is in contact with said annular face 134 surrounding the hollow.

In use, in said up-position of the spool, the groove 126 opens in the gallery 114 which is filled with high pressure fuel. The spool 108 being upwardly pushed, the edge area 130 is pressed against said annular face 134. Also, when the components are in close proximity or in contact with one another, the high pressure fuel filling the gallery 114 and the groove 126 further creates a pressure differential across the disc-flange 128 this helps to increase the sealing performance by upwardly pushing said disc-flange 128. To accommodate for further misalignments, the disc-flange 128 deflects thus ensuring a more regular sealing contact all around the edge area 130.

The contacting pressures have been modeled and, considering the dimensional tolerances, the perpendicularity error between the spool and the annular face 134, without the groove 126 the true contact may occur on only a third of said edge area with a peak pressure of about 900 MPa while, with a groove 126, the contact takes place all around the edge area and, the peak pressure is lower than 400 MPa.

The operation of the injector 14 is now partially summarised.

Initially, none of the solenoid 90, 96 is energised, the armature-and-spool assemblies 92, 98 are biased away from their respective solenoid closing return channels and preventing first fuel F1 to exit the first 58 and the second 66 control chambers. Consequently, the first fuel pressure rises in both control chambers exerting forces onto both valve members 50, 52 that close both sets of holes 44, 46 forbidding any fuel injection.

In the subsequent pilot steps, the command unit energises only the first solenoid 90 generating a magnetic field that attracts the first armature-and-spool assembly 92 which displaces and opens the first return channel enabling the first fuel F1 to exit the first control chamber 58. The pressure in said first control chamber drops allowing the needle 50 to lift and open the first set of holes 44, therefore injecting diesel F1 into the piston. This pilot step is short since the quantity injected is small during the pilot injection. This sequence of events is similar in the case of a post-injection events.

In the subsequent main injection step, the first solenoid 90 is no longer energised thus the first sets of holes 44 are closed and no diesel is injected and, the second solenoid 96 is energised attracting the second armature-and-spool assembly 98 and releasing the first fuel F1 confined in the second control chamber 66. The pressure in said second control chamber 66 drops enabling the second valve member 52 to lift-up and open the second set of holes 46 through which the CNG F2 is sprayed into the piston. This main injection step is quite long since a significant quantity of CNG is injected. Also, during these steps, the hollow needle opens and closes and, the inertia within the system means that pressure waves are generated and propagate inside the second fuel F2. Said pressure waves are damped within the second circuit C2 due to the large volumes contained in channels.

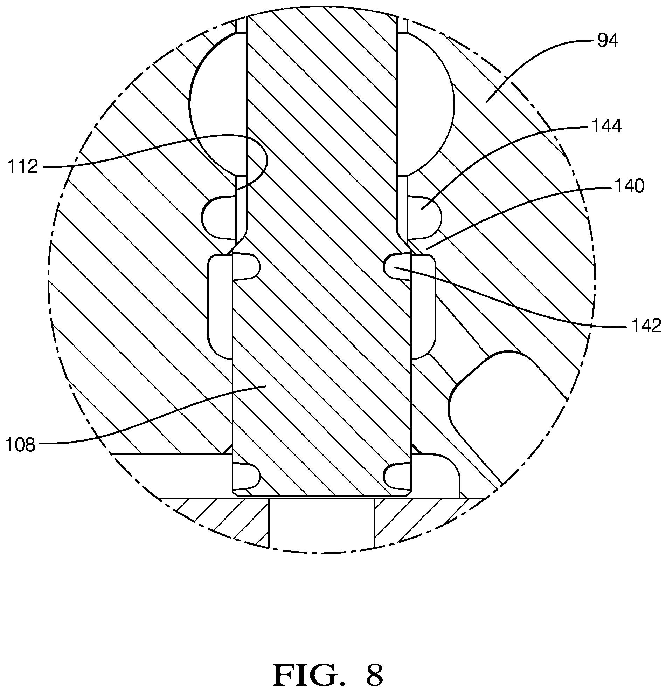

The invention can be applied to other valve embodiment as represented on figure 8 where is shown the spool end of a 3-way valve provided alternatively opening and closing a first seat arranged, as previously described on the very end of the spool and, a second seat 140 arranged above. In use, when the spool 108 moves downward, the first seat closes and the above second seat 140 opens and, when the spool 108 moves upwardly, the first seat opens and the second seats 140 closes.

In such embodiment the sealing of the second seat 140 is improved by adding a groove 142 on the spool 108, right below said second seat 140, the groove definition previously presented still applying. Resiliency of the second seat 140 can also be improved by another groove 144 arranged in the body 94 around the hydraulic bore 112, right above said second seat 140. Either one of said two grooves 142, 144, or the two grooves together may be arranged.

### LIST OF REFERENCES

- X: main axis
- F1: first fuel - diesel
- F2: second fuel - CNG
- C1: first circuit
- C2: second circuit

- 10: engine
- 12: dual-fuel injection equipment
- 14: dual-fuel injector
- 16: first inlet
- 18: second inlet
- 20: head of the injector
- 22: nozzle tip
- 24: first capnut
- 26: second capnut
- 28: connector
- 30: first inlet body
- 32: double control valve assembly
- 34: second control valve
- 36: first control valve
- 38: second inlet body
- 40: barrel member
- 42: nozzle assembly
- 44: first set of holes
- 46: second set of holes
- 48: nozzle body
- 50: first valve member - needle
- 52: second valve member - hollow needle
- 54: first spring
- 56: plug
- 58: first control chamber
- 60: under face of the barrel member
- 62: upper face of the barrel member
- 64: second control path
- 66: second control chamber
- 68: second spring
- 70: main member of the second inlet body
- 72: under face of the second inlet body
- 74: upper face of the second inlet body
- 76: radial extension
- 78: first return channel
- 80: recess
- 82: female conical face of the second inlet
- 84: under face of the first control valve
- 86: upper face of the second control valve
- 88: first body of the first control valve
- 90: first solenoid
- 92: first armature-and-spool assembly
- 94: second body of the second control valve
- 96: second solenoid
- 98: second armature-and-spool assembly
- 100: under face of the first inlet body
- 102: upper face of the first inlet body
- 104: female conical face of the first inlet
- 106: electrical leads
- 108: spool
- 110: armature
- 112: hydraulic bore
- 114: recess - gallery
- 116: armature chamber
- 118: inner channel
- 120: counterbore
- 122: upper end face
- 124: upper end region of the spool
- 126: groove
- 128: disc-flange
- 130: edge
- 132: hollow
- 134: annular face
- 140: second seat
- 142: groove
- 144: groove

## Claims

1. Control valve (34) adapted to be arranged in a fuel injector (14) or a fuel pump of an internal combustion engine between an injector upper member and a nozzle assembly, said control valve (34) having a body (94) defining an upper face (86) adapted to be pressed against a complementary face (100) of said upper member, a hydraulic bore (112) extending about a main axis (X) and in which is axially guided an armature-and-spool assembly (98), said hydraulic bore (112) opening in said upper end face (86), the spool (108) of said assembly (98) having an upper end region (124) defining an upper end face (122) adapted to be pressed in sealing contact against said complementary face (100) and wherein, said upper end region (124) is further provided with an annular groove (126) arranged in close vicinity to said upper end face (122), a disc-flange (128) comprising the peripheral edge area (130) of the upper end face being defined between said upper end face (122) and said groove (126), said groove (126) providing resilient elasticity to said disc portion (128) and,
**characterized in that**
said spool (108) is further provided with an inner channel (118) axially (X) extending and centrally opening in said upper end face (122), fuel at low pressure flowing in use in said inner channel (118),
wherein the opening of the hydraulic bore (112) in the valve upper face (86) faces a hollow (132) dug in said complementary face (100), said hollow having a smaller section than the bore (112) so that, when pressed against said complementary face (100), the peripheral edge area (130) of the spool upper end face comes in contact against an annular area (134) surrounding said hollow (132), said disc-flange (128) deflecting and ensuring a more regular sealing contact all around the edge area (130).

2. Control valve (34) as claimed in claim 1 wherein the opening of the inner channel (118) in said upper end face (122) defines a counterbore (120) arranged in said end face (122).

3. Control valve (34) as claimed in any of the preceding claims wherein the opening of the hydraulic bore (112) in the valve upper face (86) defines a gallery (114) arranged in the upper face (86) so that, the upper end region (124) of the spool protrudes in said gallery (114).

4. Control valve (34) as claimed in claim 3 wherein said annular groove (126) opens in said gallery (114).

5. Control valve (34) as claimed in claim 4 wherein, in use, pressurised fuel fills said gallery (114) and said groove (126).

6. Fuel injector (14) provided with a control valve (34) as claimed in any of the preceding claims.

7. Fuel injector (14) as claimed in claim 6 wherein said injector is a dual-fuel injector (14) adapted to be arranged in a dual-fuel injection equipment (12) of an internal combustion engine (10).

8. Fuel injection equipment (12) comprising at least one fuel injector (14) as claimed in any one of the claims 6 or 7.

## Patentansprüche

1. Steuerventil (34), das ausgebildet ist, in einer Kraftstoffeinspritzdüse (14) oder einer Kraftstoffpumpe eines Verbrennungsmotors zwischen einem oberen Einspritzdüsenelement und einer Düsenanordnung angeordnet zu sein, wobei das Steuerventil (34) einen Körper (94) hat, der eine obere Fläche (86) definiert, die ausgebildet ist, gegen eine komplementäre Fläche (100) des oberen Elements gedrückt zu werden, eine Hydraulikbohrung (112), die sich um eine Hauptachse (X) erstreckt und in der eine Anker- und Spulenanordnung (98) axial geführt ist, wobei sich die Hydraulikbohrung (112) in der oberen Endfläche (86) öffnet, wobei die Spule (108) der Anordnung (98) einen oberen Endbereich (124) hat, der eine obere Endfläche (122) definiert, die ausgebildet ist, in einem abdichtenden Kontakt gegen die komplementäre Fläche (100) gedrückt zu werden, und wobei der obere Endbereich (124) weiter mit einer ringförmigen Nut (126) versehen ist, die in unmittelbarer Nähe zu der oberen Endfläche (122) angeordnet ist, wobei ein Scheibenflansch (128), der den Umfangsrandbereich (130) der oberen Endfläche aufweist, zwischen der oberen Endfläche (122) und der Nut (126) definiert ist, wobei die Nut (126) eine nachgiebige Elastizität für den Scheibenteil (128) vorsieht, und
**dadurch gekennzeichnet, dass**
die Spule (108) weiter mit einem Innenkanal (118) versehen ist, der sich axial (X) erstreckt und zentral in der oberen Endfläche (122) öffnet, wobei Kraftstoff mit niedrigem Druck, in Gebrauch, in den Innenkanal (118) strömt,
wobei die Öffnung der Hydraulikbohrung (112) in der oberen Fläche (86) des Ventils einem Hohlraum (132) zugewandt ist, der in der komplementären Fläche (100) vorgesehen ist, wobei der Hohlraum einen kleineren Querschnitt als die Bohrung (112) hat, so dass, wenn gegen die komplementäre Fläche (100) gedrückt, der Umfangsrandbereich (130) der oberen Endfläche der Spule in Kontakt mit einem ringförmigen Bereich (134) kommt, der den Hohlraum (132) umgibt, wobei die Scheibenflansch (128) abgelenkt wird und einen gleichmäßigeren Dichtungskontakt um den gesamten Randbereich (130) sicherstellt.

2. Steuerventil (34) gemäß Anspruch 1, wobei die Öffnung des Innenkanals (118) in der oberen Endfläche (122) eine Senkbohrung (120) definiert, die in der Endfläche (122) angeordnet ist.

3. Steuerventil (34) gemäß einem der vorhergehenden Ansprüche, wobei die Öffnung der Hydraulikbohrung (112) in der oberen Fläche (86) des Ventils eine Galerie (114) definiert, die in der oberen Fläche (86) angeordnet ist, so dass der obere Endbereich (124) der Spule in die Galerie (114) ragt.

4. Steuerventil (34) gemäß Anspruch 3, wobei sich die ringförmige Nut (126) in die Galerie (114) öffnet.

5. Steuerventil (34) gemäß Anspruch 4, wobei, in Gebrauch, unter Druck stehender Kraftstoff die Galerie (114) und die Nut (126) füllt.

6. Kraftstoffeinspritzdüse (14), die mit einem Steuerventil (34) gemäß einem der vorhergehenden Ansprüche versehen ist.

7. Kraftstoffeinspritzdüse (14) gemäß Anspruch 6, wobei die Einspritzdüse eine Dualkraftstoffeinspritzdüse (14) ist, die ausgebildet ist, in einer Dualkraftstoffeinspritzdüseneinrichtung (12) eines Verbrennungsmotors (10) angeordnet zu sein.

8. Kraftstoffeinspritzdüse-Einrichtung (12) mit zumindest einer Kraftstoffeinspritzdüse (14) gemäß einem der Ansprüche 6 oder 7.

## Revendications

1. Vanne de commande (34) conçue pour être disposée dans un injecteur de carburant (14) ou une pompe à carburant d'un moteur à combustion interne entre un élément supérieur d'injecteur et un ensemble formant buse, ladite vanne de commande (34) comportant un corps (94) définissant une face supérieure (86) conçue pour être pressée contre une face complémentaire (100) dudit élément supérieur, un alésage hydraulique (112) s'étendant autour d'un axe principal (X) et dans lequel est guidé axialement un ensemble armature et bobine (98), ledit alésage hydraulique (112) débouchant dans ladite face d'extrémité supérieure (86), la bobine (108) dudit ensemble (98) comportant une région d'extrémité supérieure (124) définissant une face d'extrémité supérieure (122) conçue pour être pressée en contact étanche contre ladite face complémentaire (100) et ladite région d'extrémité supérieure (124) étant en outre pourvue d'une rainure annulaire (126) formée dans le voisinage immédiat de ladite face d'extrémité supérieure (122), une collerette discoïdale (128) comprenant la zone de bord périphérique (130) de la face d'extrémité supérieure étant définie entre ladite face d'extrémité supérieure (122) et ladite rainure (126), ladite rainure (126) conférant une élasticité à ladite partie discoïdale (128), et
**caractérisée en ce que**
ladite bobine (108) est en outre pourvue d'un canal interne (118) s'étendant axialement (X) et débouchant centralement dans ladite face d'extrémité supérieure (122), du carburant à faible pression s'écoulant, lors de l'utilisation, dans ledit canal interne (118),
le débouché de l'alésage hydraulique (112) dans la face supérieure (86) de la vanne faisant face à une cavité (132) ménagée dans ladite face complémentaire (100), ladite cavité présentant une section inférieure à celle de l'alésage (112) de telle sorte que, lorsqu'elle est pressée contre ladite face complémentaire (100), la zone de bord périphérique (130) de la face d'extrémité supérieure de la bobine vienne en contact contre une zone annulaire (134) entourant ladite cavité (132), ladite collerette discoïdale (128) fléchissant et assurant un contact étanche plus régulier tout autour de la zone de bord (130).

2. Vanne de commande (34) selon la revendication 1, dans laquelle le débouché dudit canal interne (118) dans ladite face d'extrémité supérieure (122) définit un lamage (120) formé dans ladite face d'extrémité (122).

3. Vanne de commande (34) selon l'une quelconque des revendications précédentes, dans laquelle le débouché de l'alésage hydraulique (112) dans la face supérieure (86) de la vanne définit une galerie (114) formée dans la face supérieure (86) de telle sorte que la région d'extrémité supérieure (124) de la bobine fasse saillie dans ladite galerie (114).

4. Vanne de commande (34) selon la revendication 3, dans laquelle ladite rainure annulaire (126) débouche dans ladite galerie (114).

5. Vanne de commande (34) selon la revendication 4, dans laquelle, lors de l'utilisation, du carburant sous pression remplit ladite galerie (114) et ladite rainure (126).

6. Injecteur de carburant (14) pourvu d'une vanne de commande (34) selon l'une quelconque des revendications précédentes.

7. Injecteur de carburant (14) selon la revendication 6, ledit injecteur étant un injecteur bicarburant (14) conçu pour être disposé dans un système d'injection bicarburant (12) d'un moteur à combustion interne (10).

8. Système d'injection de carburant (12) comprenant au moins un injecteur de carburant (14) selon l'une quelconque des revendications 6 et 7.
